# EUROPÄISCHE PATENTSCHRIFT

(11) **EP 2 795 996 B1**
(45) Veröffentlichungstag und Bekanntmachung des Hinweises auf die Patenterteilung: **19.07.2017**
(21) Anmeldenummer: 12797936.7
(22) Anmeldetag: 07.12.2012
(51) Int. Cl.: H05B 3/84, F21V 29/00

(54) **BEHEIZBARE LEUCHTENABDECKUNG**
HEATABLE LIGHT COVERING
ARMATURE LUMINEUSE CHAUFFABLE

(30) Priorität: 20.12.2011 EP 11194447
(43) Veröffentlichungstag der Anmeldung: 29.10.2014
(73) Patentinhaber: Saint-Gobain Glass France, 92400 Courbevoie (FR)
(72) Erfinder: LESMEISTER, Lothar, NL-6373 Landgraaf (NL); SCHLARB, Andreas, 42287 Wuppertal (DE); SCHMIDT, Sebastian, 70176 Stuttgart (DE); GULDAN, Marcus, 73066 Uhingen (DE)
(74) Vertreter: Gebauer, Dieter Edmund
(86) Internationale Anmeldenummer: PCT/EP2012/074796
(87) Internationale Veröffentlichungsnummer: WO 2013/092253

(56) Entgegenhaltungen:
- EP-A1- 2 264 360
- EP-A1- 2 315 494
- EP-A2- 0 992 381
- DE-A1-102008 019 664

## Beschreibung

Die Erfindung betrifft eine beheizbare Leuchtenabdeckung, ein Verfahren zu deren Herstellung und deren Verwendung.

Die Wirksamkeit einer Fahrzeugbeleuchtung kann bei niedrigen Umgebungstemperaturen, insbesondere im Winter beeinträchtigt werden. Schnee, Eis oder kondensierte Luftfeuchtigkeit können sich auf der Außenseite der Abdeckung der Fahrzeugleuchte anlagern. An der Innenseite der Leuchtenabdeckung kann ebenfalls Luftfeuchtigkeit kondensieren und einfrieren. Dadurch wird die Transparenz der Leuchtenabdeckung herabgesetzt und die Funktionalität der Beleuchtung vermindert. Die Sicherheit im Straßenverkehr wird nachteilig beeinflusst.

Fahrzeugscheinwerfer wurden früher vorrangig mit Halogenlampen oder Xenonlampen ausgerüstet. Diese Lampen entwickeln im Betrieb erhebliche Wärme. Die Wärme wird auf die Leuchtenabdeckung übertragen und führt zum Abtauen und / oder Trocknen der Leuchtenabdeckung. Neuerdings werden Fahrzeugscheinwerfer verstärkt mit Leuchtdioden (LED) ausgerüstet, die im Betrieb deutlich weniger Wärme erzeugen. Zum Entfernen von Feuchtigkeit und Eis ist deshalb eine aktive Beheizung der Leuchtenabdeckung erforderlich.

US 2006/0232972 A1 offenbart ein Verfahren zur Herstellung einer Abdeckung für eine Fahrzeugleuchte. Dabei werden ein Heizdraht und zwei elektrische Anschlusselemente auf eine plane Kunststoffplatte aufgebracht. Jedes Ende des Heizdrahtes wird mit einem elektrischen Anschlusselement verschweißt. Anschließend wird die Leuchtenabdeckung aus der Kunststoffplatte mittels Thermoformen geformt. Dabei besteht die Gefahr einer Beschädigung des Heizdrahtes oder der Verbindung zwischen Heizdraht und einem elektrischen Anschlusselement. Zudem schränkt die Methode des Thermoformens die Gestaltungsfreiheit bezüglich der Form der Leuchtenabdeckung ein. Die elektrische Kontaktierung ist zudem fehleranfällig: wenn die elektrisch leitende Verbindung zwischen den beiden Anschlusselementen beispielsweise durch einen Bruch des Heizdrahtes unterbrochen wird, fällt die Heizfunktion komplett aus.

Die europäischen Patentanmeldungen EP 2315494 A1 und EP 2264360 A1 zeigen jeweils eine Frontabdeckung für eine Vorderleuchte eines Kraftfahrzeugs, bei der ein Hitzegenerator an der Innenseite eines Abdeckungskörpers angebracht ist.

Eine Aufgabe der vorliegenden Erfindung ist es, eine beheizbare Leuchtenabdeckung mit verbesserter elektrischer Kontaktierung der Heizstrukturen bereitzustellen. Eine weitere

Aufgabe der vorliegenden Erfindung ist es, ein Verfahren zur Herstellung einer beheizbaren Leuchtenabdeckung bereitzustellen, wobei eine Beschädigung der Heizstrukturen vermieden wird.

Die Aufgabe der vorliegenden Erfindung wird erfindungsgemäß durch eine beheizbare Leuchtenabdeckung gemäß dem unabhängigen Anspruch 1 gelöst. Bevorzugte Ausführungen gehen aus den Unteransprüchen hervor.

Die erfindungsgemäße beheizbare Leuchtenabdeckung umfasst zumindest die folgenden Merkmale:
- einen polymeren Grundkörper,
- eine erste Stromsammelschiene, eine zweite Stromsammelschiene und mindestens zwei Leiterbahnen an der Innenseite des polymeren Grundkörpers, wobei jede Leiterbahn mit der ersten Stromsammelschiene und mit der zweiten Stromsammelschiene elektrisch verbunden ist.

Mit Innenseite wird die Oberfläche des polymeren Grundkörpers bezeichnet, die dafür vorgesehen ist, nach der Verbindung der beheizbaren Leuchtenabdeckung mit den weiteren Elementen der Leuchte zur Lichtquelle hingewandt zu sein. Mit Außenseite wird entsprechend die Oberfläche des polymeren Grundkörpers bezeichnet, die dafür vorgesehen ist, nach der Verbindung der beheizbaren Leuchtenabdeckung mit den weiteren Elementen der Leuchte von der Lichtquelle abgewandt zu sein.

Beim Anlegen einer elektrischen Potentialdifferenz zwischen erster und zweiter Stromsammelschiene fließt Strom durch jede der Leiterbahnen. Dadurch erwärmen sich die Leiterbahnen, die somit eine aktive Beheizung der Leuchtenabdeckung ermöglichen.

Durch die erste und die zweite Stromsammelschiene wird vorteilhaft eine stabile elektrische Kontaktierung der Leiterbahnen bereitgestellt. Jede Leiterbahn ist dabei mit der ersten und der zweiten Stromsammelschiene elektrisch verbunden und wird unabhängig von den übrigen Leiterbahnen mit Spannung versorgt. Die Beschädigung einer Leiterbahn führt somit nicht zu einem kompletten Ausfall der aktiven Beheizung der Leuchtenabdeckung. Das ist ein großer Vorteil der vorliegenden Erfindung.

Die Aufgabe der vorliegenden Erfindung wird weiter erfindungsgemäß durch ein Verfahren zur Herstellung einer beheizbaren Leuchtenabdeckung gelöst, wobei zumindest:
a) ein polymerer Grundkörper bereitgestellt wird,
b) mindestens zwei Leiterbahnen durch Ultraschall-Einbettung an der Innenseite des polymeren Grundkörpers angebracht werden und
c) jede Leiterbahn mit einer ersten Stromsammelschiene und einer zweiten Stromsammelschiene elektrisch verbunden wird.

Der polymere Grundkörper weist die für die Leuchtenabdeckung vorgesehene dreidimensionale, typischerweise gebogene Form auf. Der polymere Grundkörper muss vor dem Verbinden mit den übrigen Elementen der Leuchte nicht weiter umgeformt werden. Bearbeitungsschritte, die nicht mit einer Änderung der Biegung des polymeren Grundkörpers einhergehen, beispielsweise Bohrungen, Fräsungen oder Beschneidungen im Randbereich, sind aber im Sinne der Erfindung möglich.

Der polymere Grundkörper der Leuchtenabdeckung wird erfindungsgemäß bereitgestellt, bevor die Leiterbahnen aufgebracht werden. Die Leiterbahnen werden daher nicht während des Formens des polymeren Grundkörpers belastet. Der besondere Vorteil liegt in der Vermeidung von Beschädigungen der Leiterbahnen und / oder der elektrischen Kontaktierung der Leiterbahnen. Durch die erste und die zweite Stromsammelschiene wird zudem eine stabile elektrische Kontaktierung jeder einzelnen Leiterbahn bereitgestellt.

Der polymere Grundkörper kann durch alle geeigneten, dem Fachmann bekannten Methoden zur Kunststoffverarbeitung hergestellt werden, beispielsweise durch Thermoformen. In einer bevorzugten Ausführung der Erfindung wird der polymere Grundkörper durch Spritzgießen hergestellt. Das Spritzgießen ermöglicht im Vergleich zum Thermoformen die Herstellung einer größeren Zahl an möglichen Formen des polymeren Grundkörpers. Zudem kann der polymere Grundkörper nahezu abfallfrei hergestellt werden, weil ein nachträgliches Beschneiden des Werkstücks nicht notwendig ist. Komplexe Oberflächenstrukturen können direkt in die Abdeckung eingebracht werden.

Der polymere Grundkörper enthält bevorzugt zumindest Polyethylen (PE), Polycarbonate (PC), Polypropylen (PP), Polystyrol, Polybutadien, Polynitrile, Polyester, Polyurethane, Polymethylmethacrylate, Polyacrylate, Polyester, Polyamide, Polyethylenterephthalat, Acrylnitril-Butadien-Styrol (ABS), Styrol-Acrylnitril (SAN), Acrylester-Styrol-Acrylnitril (ASA), Acrylnitril-Butadien-Styrol - Polycarbonat (ABS/PC) und / oder Copolymere oder Gemische davon.

Der polymere Grundkörper enthält besonders bevorzugt Polycarbonate (PC) und / oder Polymethylmethacrylat (PMMA). Das ist besonders vorteilhaft im Hinblick auf die Transparenz, die Verarbeitung, die Festigkeit, die Witterungsbeständigkeit und die chemische Beständigkeit des polymeren Grundkörpers.

Der polymere Grundkörper weist bevorzugt ein Dicke von 2 mm bis 5 mm auf. Das ist besonders vorteilhaft im Hinblick auf die Festigkeit und die Verarbeitung des polymeren Grundkörpers. Die Größe des polymeren Grundkörpers kann breit variieren und richtet sich nach der erfindungsgemäßen Verwendung.

Der polymere Grundkörper ist erfindungsgemäß zumindest bereichsweise transparent. Der polymere Grundkörper kann farblos, gefärbt oder getönt sein. Der polymere Grundkörper kann klar oder trüb sein.

Die Leiterbahnen verlaufen bevorzugt geradlinig zwischen der ersten und der zweiten Stromsammelschiene. Die Leiterbahnen können aber auch beispielsweise wellenartig, mäanderartig oder in Form eines Zick-Zack-Musters zwischen der ersten und der zweiten Stromsammelschiene verlaufen. Der Abstand zweier benachbarter Leiterbahnen ist bevorzugt über die gesamte Länge der Leiterbahnen konstant. Der Abstand zweier benachbarter Leiterbahnen kann sich aber auch im Verlauf zwischen der ersten und der zweiten Stromsammelschiene ändern.

Die Leiterbahnen können in jeder beliebigen Richtung verlaufen, bevorzugt horizontal oder vertikal.

Die Leiterbahnen werden erfindungsgemäß mittels Ultraschall-Einbettung auf den polymeren Grundkörper aufgebracht. Dabei wird eine Sonotrode bevorzugt mit einem mehrachsigen Roboter über ein an die dreidimensionale Geometrie des polymeren Grundkörpers angepasstes Roboterprogramm über die Innenseite des polymeren Grundkörpers geführt. Die Sonotrode überträgt von einem Ultraschall-Generator erzeugte, hochfrequente mechanische Schwingungen (Ultraschall) auf den polymeren Grundkörper. Dabei wird Wärme erzeugt und eine Oberflächenschicht der Innenseite des polymeren Grundkörpers angeschmolzen. Die Leiterbahnen werden in die angeschmolzene Oberflächenschicht eingebracht. Dazu führt die Sonotrode einen Heizdraht an ihrer Spitze, wobei der Heizdraht über eine Drahtrolle nahe der Sonotrode kontinuierlich nachgespeist wird. Ein als Sonotrode geeignetes Werkzeug ist beispielsweise aus US 6,023,837 A bekannt.

Die Eindringtiefe der Leiterbahnen in den polymeren Grundkörper beträgt bevorzugt von 50 % bis 90 %, besonders bevorzugt von 60 % bis 75 % der Dicke der Leiterbahnen. Das unkomplizierte Aufbringen der Leiterbahnen mittels Ultraschall-Einbettung ist besonders vorteilhaft im Hinblick auf eine stabile Verbindung zwischen Leiterbahnen und polymerem Grundkörper.

Der Abstand zwischen zwei benachbarten Leiterbahnen beträgt bevorzugt von 1 mm bis 25 mm, besonders bevorzugt 3 mm bis 15 mm. Das ist besonders vorteilhaft im Hinblick auf die Transparenz der Leuchtenabdeckung und die Verteilung der über die Leiterbahnen eingebrachte Heizleistung. Die Länge der Leiterbahnen kann breit variieren und so leicht den Erfordernissen im Einzelfall angepasst werden. Die Leiterbahnen weisen beispielsweise Längen von 5 cm bis 50 cm auf.

Die Leiterbahnen enthalten zumindest ein Metall, bevorzugt Wolfram, Kupfer, Nickel, Mangan, Aluminium, Silber, Chrom und / oder Eisen, sowie Gemische und / oder Legierungen davon. Die Leiterbahnen enthalten besonders bevorzugt Wolfram und / oder Kupfer. Damit wird eine besonders gute Heizwirkung erzielt. Die Dicke der Leiterbahnen beträgt bevorzugt von 15 µm bis 200 µm, besonders bevorzugt von 25 µm bis 90 µm. Das ist besonders vorteilhaft im Hinblick auf die Transparenz der Leuchtenabdeckung, die eingebrachte Heizleistung und die Vermeidung von Kurzschlüssen.

Es hat sich gezeigt, dass besonders gute Ergebnisse mit Leiterbahnen erzielt werden, die Wolfram enthalten und eine Dicke von bevorzugt 15 µm bis 100 µm, besonders bevorzugt von 25 µm bis 50 µm aufweisen. Besonders gute Ergebnisse werden ebenfalls mit Leiterbahnen erzielt, die Kupfer enthalten und eine Dicke von bevorzugt 25 µm bis 200 µm, besonders bevorzugt 60 µm bis 90 µm aufweisen.

Benachbarte Leiterbahnen können auf der von der zweiten Stromsammelschiene abgewandten Seite der ersten Stromsammelschiene oder auf der von der ersten Stromsammelschiene abgewandten Seite der zweiten Stromsammelschiene miteinander verbunden sein. Die Leiterbahnen können so in Form eines einzigen Heizdrahtes auf den polymeren Grundkörper aufgebracht werden, wobei der Heizdraht nach dem Aufbringen zwei oder mehr Abschnitte umfasst, die als Leiterbahnen vorgesehen und die schleifenartig miteinander verbunden sind. Jeder als Leiterbahn vorgesehene Abschnitt des Heizdrahtes wird im Bereich eines Endes mit der ersten Stromsammelschiene und im Bereich des anderen Endes mit der zweiten Stromsammelschiene verbunden. Jeder Abschnitt des Heizdrahtes im Bereich der Stromsammelschienen und zwischen den Stromsammelschienen bildet eine Leiterbahn aus.

Alternativ können benachbarte Leiterbahnen auf der von der zweiten Stromsammelschiene abgewandten Seite der ersten Stromsammelschiene und auf der von der ersten Stromsammelschiene abgewandten Seite der zweiten Stromsammelschiene nicht miteinander verbunden sein. Die Leiterbahnen werden so in Form mehrere Heizdrähte auf den polymeren Grundkörper aufgebracht, wobei jeder Heizdraht im Bereich eines Endes mit der ersten Stromsammelschiene und im Bereich des anderen Endes mit der zweiten Stromsammelschiene verbunden wird. Jeder Heizdraht umfasst eine Leiterbahn im Bereich der Stromsammelschienen und zwischen den Stromsammelschienen.

Zumindest ein Abschnitt jeder Leiterbahn ist in den polymeren Grundkörper eingebettet. Die Leiterbahnen können entlang ihrer gesamten Länge in den polymeren Grundkörper eingebettet sein. Das ist besonders vorteilhaft im Hinblick auf eine stabile Verbindung zwischen dem polymeren Grundkörper und den Leiterbahnen. Die elektrische Kontaktierung mit der ersten und der zweiten Stromsammelschiene erfolgt dann auf der vom polymeren Grundkörper abgewandten Seite der Leiterbahnen.

In einer vorteilhaften Ausgestaltung der Erfindung sind die zur elektrischen Kontaktierung mit den Stromsammelschienen vorgesehenen Bereiche an den Enden der Leiterbahnen nicht in den polymeren Grundkörper eingebettet und lassen sich von diesem abheben. Der besondere Vorteil liegt in der Möglichkeit einer einfachen und stabilen elektrischen Kontaktierung mit den Stromsammelschienen. Die Stromsammelschienen sind bevorzugt auf dem polymeren Grundkörper angeordnet und beispielsweise mit einem Klebstoff oder einem doppelseitigen Klebeband auf diesem fixiert. Der nicht in den polymeren Grundkörper eingebettete Bereich an einem Ende jeder Leiterbahnen wird an der vom polymeren Grundkörper abgewandten Seite der ersten Stromsammelschiene über die erste Stromsammelschiene geführt und mit der ersten Stromsammelschiene verbunden. Der nicht in den polymeren Grundkörper eingebettete Bereich am anderen Ende jeder Leiterbahnen wird an der vom polymeren Grundkörper abgewandten Seite der zweiten Stromsammelschiene über die zweite Stromsammelschiene geführt und mit der zweiten Stromsammelschiene verbunden.

In einer besonders bevorzugten Ausgestaltung werden eine erste untere Stromsammelschiene und eine zweite untere Stromsammelschiene auf dem polymeren Grundkörper angeordnet. Der nicht in den polymeren Grundkörper eingebettete Bereich an einem Ende jeder Leiterbahn wird zwischen der ersten unteren Stromsammelschiene und einer ersten oberen Stromsammelschiene angeordnet und mit der ersten unteren und der ersten oberen Stromsammelschiene verbunden. Der nicht in den polymeren Grundkörper eingebettete Bereich am anderen Ende jeder Leiterbahn wird zwischen der zweiten unteren Stromsammelschiene und einer zweiten oberen Stromsammelschiene angeordnet und mit der zweiten unteren und der zweiten oberen Stromsammelschiene verbunden. Der besondere Vorteil liegt in einer effektiven und sehr stabilen elektrischen Kontaktierung der Leiterbahnen. Zur Beheizung der Leuchtenabdeckung wird an die erste untere Stromsammelschiene und die erste obere Stromsammelschiene ein erstes elektrisches Potential angelegt. An die zweite untere Stromsammelschiene und die zweite obere Stromsammelschiene wird ein zweites elektrisches Potential angelegt.

Die elektrische Verbindung zwischen den Leiterbahnen und den Stromsammelschienen erfolgt bevorzugt mittels eines elektrisch leitfähigen Klebstoffs, durch Löten oder Schweißen.

Die Stromsammelschienen enthalten bevorzugt Wolfram, Kupfer, Nickel, Mangan, Aluminium, Silber, Chrom und / oder Eisen, sowie Gemische und / oder Legierungen davon, besonders bevorzugt Wolfram und / oder Kupfer. Die Stromsammelschienen weisen bevorzugt eine Dicke von 10 µm bis 200 µm, besonders bevorzugt von 50 µm bis 100 µm auf. Die Breite einer Stromsammelschiene, entlang derer die Stromsammelschiene mit den Leiterbahnen verbunden ist, beträgt bevorzugt von 2 mm bis 100 mm, besonders bevorzugt von 5 mm bis 20 mm. Die Länge der Stromsammelschienen kann breit variieren und so hervorragend den Erfordernissen des Einzelfalls angepasst werden. Die minimale Länge der Stromsammelschienen ergibt sich aus der Anzahl der Leiterbahnen und dem Abstand von benachbarten Leiterbahnen. Die Länge der Stromsammelschienen beträgt beispielsweise von 5 cm bis 20 cm. Die Stromsammelschienen werden mit einer externen Spannungsversorgung verbunden, so dass eine elektrische Potentialdifferenz zwischen der ersten und der zweiten Stromsammelschiene angelegt werden kann.

Aus ästhetischen Gründen kann es gewünscht sein, dass die elektrische Kontaktierung der Leiterbahnen mittels der Stromsammelschienen von außen nicht sichtbar ist. Dazu kann beispielsweise der polymere Grundkörper im Bereich der Stromsammelschienen gefärbt oder geschwärzt werden. Der polymere Grundkörper kann beispielsweise durch Mehrkomponenten-Spritzgießen hergestellt werden, wobei der polymere Grundkörper in den Bereichen, auf denen die Stromsammelschienen angeordnet werden sollen, eine opake Komponente umfasst, welche die Sicht auf die elektrische Kontaktierung durch den polymeren Grundkörper hindurch verdeckt.

Die opake Komponente des polymeren Grundkörpers enthält bevorzugt zumindest Polyethylen (PE), Polycarbonate (PC), Polypropylen (PP), Polystyrol, Polybutadien, Polynitrile, Polyester, Polyurethane, Polymethylmethacrylate, Polyacrylate, Polyester, Polyamide, Polyethylenterephthalat, Acrylnitril-Butadien-Styrol (ABS), Styrol-Acrylnitril (SAN), Acrylester-Styrol-Acrylnitril (ASA), Acrylnitril-Butadien-Styrol - Polycarbonat (ABS/PC) und / oder Copolymere oder Gemische davon, besonders bevorzugt Polycarbonate (PC), Polyethylenterephthalat (PET) und / oder Polymethylmethacrylat (PMMA).

Die opake Komponente des polymeren Grundkörpers enthält bevorzugt zumindest ein Farbmittel. Durch das Farbmittel wird die Opazität der Komponente erreicht. Das Farbmittel kann anorganische und / oder organische Farbstoffe und / oder Pigmente enthalten. Das Farbmittel kann bunt oder unbunt sein. Geeignete Farbmittel sind dem Fachmann bekannt und können beispielsweise im *Colour Index* der *British Society of Dyers and Colourists* und der *American Association of Textile Chemists and Colorists* nachgeschlagen werden. Bevorzugt wird ein Schwarz-Pigment als Farbmittel verwendet, beispielsweise Pigmentruß (Carbon Black), Anilinschwarz, Beinschwarz, Eisenoxidschwarz, Spinellschwarz und / oder Graphit. Dadurch wird eine schwarze opake Komponente erreicht.

Die opake Komponente kann weiter anorganische oder organische Füllstoffe, besonders bevorzugt SiO₂, Al₂O₃, TiO₂, Tonmineralien, Silikate, Zeolithe, Glasfasern, Kohlenstofffasern, Glaskugeln, organische Fasern und/oder Gemische davon enthalten. Die Füllstoffe können die Stabilität der opaken Komponente weiter erhöhen. Zudem können die Füllstoffe den Anteil an polymeren Materialien verringern und so die Herstellungskosten des Bauteils vermindern.

Alternativ kann zwischen Stromsammelschiene und polymeren Grundkörper ein gefärbtes oder geschwärztes Element angeordnet werden. Alternativ können Abdecksiebdrucke auf einer Oberfläche des polymeren Grundkörpers aufgebracht werden.

In einer vorteilhaften Ausgestaltung der Erfindung wird auf die Außenseite des polymeren Grundkörpers eine Schutzbeschichtung aufgebracht, um die erfindungsgemäßen Leuchtenabdeckung vor Umwelteinflüssen zu schützen. Bevorzugt werden thermisch härtende oder UV-härtende Lacksysteme auf Basis von Polysiloxanen, Polyacrylaten, Polymethacrylaten und / oder Polyurethanen verwendet. Die Schutzbeschichtung hat bevorzugt eine Schichtdicke von 1 µm bis 50 µm, besonders bevorzugt von 2 µm bis 25 µm. Der besondere Vorteil liegt in der erhöhten Kratzbeständigkeit und Witterungsbeständigkeit des polymeren Grundkörpers durch die Schutzbeschichtung.

Die Schutzbeschichtung kann neben farbgebenden Verbindungen und Pigmenten auch UV-Blocker, Konservierungsstoffe sowie Komponenten zur Erhöhung der Kratzfestigkeit, beispielsweise Nanopartikel enthalten.

Die Schutzbeschichtung kann beispielsweise durch ein Tauch-, Flut-, oder Sprühverfahren auf die Außenseite des polymeren Grundkörpers aufgebracht werden. Die Schutzbeschichtung wird nach dem Aufbringen bevorzugt über Temperatur und / oder UV-Licht-Eintrag ausgehärtet. Bei Herstellung des polymeren Grundkörpers durch Spritzgießen kann die Schutzbeschichtung auch durch ein *In Mould* Coating-Verfahren auf die Außenseite des polymeren Grundkörpers aufgebracht werden.

Als Schutzbeschichtung geeignete Produkte sind beispielsweise das AS4000, das AS4700, das PHC587 oder das UVHC300, die von der Firma Momentive bereitgestellt werden.

Die Schutzbeschichtung kann auch mehrere Schichten umfassen, bevorzugt eine haftvermittelnde Schicht auf dem polymeren Grundkörper und eine Lackschicht auf der haftvermittelnden Schicht. Die haftvermittelnde Schicht kann beispielsweise Acrylate enthalten und eine Schichtdicke von 0,4 µm bis 5 µm aufweisen. Die Lackschicht kann beispielsweise Polysiloxane enthalten und eine Schichtdicke von 1 µm bis 15 µm aufweisen.

Die haftvermittelnde Schicht wird nach dem Aufbringen bevorzugt getrocknet, bevor die Lackschicht aufgebracht wird.

Die Schutzbeschichtung kann vor oder nach dem Anbringen der Leiterbahnen und Stromsammelschienen aufgebracht werden. Die Schutzbeschichtung kann vor oder nach dem Verbinden der Leiterbahnen mit den Stromsammelschienen aufgebracht werden.

Die beheizbare Leuchtenabdeckung wird bevorzugt als Abdeckung für Leuchten von Fortbewegungsmitteln für den Verkehr auf dem Lande, in der Luft oder zu Wasser verwendet, insbesondere für Frontscheinwerfer, Rück-, Seitenmarkierungs- und / oder Umrissleuchten von Personenkraftwagen, Lastkraftwagen, Bussen, Straßenbahnen, U-Bahnen, Zügen und Motorrädern.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: eine Draufsicht auf die Innenseite einer ersten Ausgestaltung der erfindungsgemäßen beheizbaren Leuchtenabdeckung,
- Fig. 2: eine Draufsicht auf die Innenseite einer weiteren Ausgestaltung der erfindungsgemäßen beheizbaren Leuchtenabdeckung,
- Fig. 3: einen Schnitt entlang A-A' durch die beheizbaren Leuchtenabdeckung gemäß Figur 1,
- Fig. 4: einen Schnitt entlang B-B' durch die beheizbaren Leuchtenabdeckung gemäß Figur 1,
- Fig. 5: einen Schnitt entlang B-B' durch eine weitere Ausgestaltung der erfindungsgemäßen beheizbaren Leuchtenabdeckung,
- Fig. 6: einen Schnitt entlang B-B' durch eine weitere Ausgestaltung der erfindungsgemäßen beheizbaren Leuchtenabdeckung und
- Fig. 7: ein detailliertes Flussdiagramm des erfindungsgemäßen Verfahrens zur Herstellung einer beheizbaren Leuchtenabdeckung.

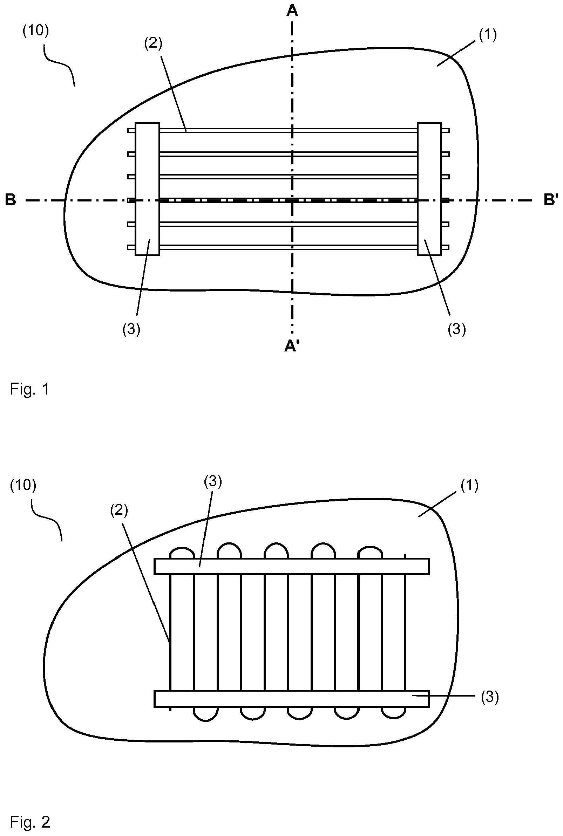

Fig. 1, Fig. 3 und Fig. 4 zeigen je ein Detail einer erfindungsgemäßen Leuchtenabdeckung 10 für einen PKW-Frontscheinwerfer. Der polymere Grundkörper 1 enthält Polycarbonat (PC) und weist eine Dicke von 4 mm auf. Auf der Innenseite (I) des polymeren Grundkörpers 1 sind sechs Heizdrähte mit einer Länge von 20 cm als Leiterbahnen 2 angeordnet. Die Leiterbahnen 2 sind parallel zueinander und horizontal angeordnet. Die Leiterbahnen 2 enthalten Kupfer und weisen eine Dicke von 70 µm auf. Der Abstand zwischen zwei benachbarten Heizdrähten beträgt 10 mm. Die Leiterbahnen 2 sind mittels Ultraschall-Einbettung auf ihrer gesamten Länge in dem polymeren Grundkörper eingebettet, wobei die Eindringtiefe etwa 45 µm beträgt.

Jede Leiterbahn 2 ist mit zwei Stromsammelschienen 3 elektrisch verbunden. Die elektrische Verbindung zwischen den Leiterbahnen 2 und den Stromsammelschienen 3 erfolgt über einen elektrisch leitfähigen Kleber 5. Die Stromsammelschienen 3 enthalten Kupfer und weisen eine Dicke von 50 µm, eine Länge von 6 cm und eine Breite von 1 cm auf.

Die Stromsammelschienen 3 sind mit einer nicht dargestellten externen Spannungsversorgung verbunden. Beim Anlegen einer Potentialdifferenz zwischen der ersten Stromsammelschiene 3 und der zweiten Stromsammelschiene 3 fließt Strom durch jede Leiterbahn 2. Die dabei erzeugte Wärme ermöglicht eine aktive Beheizung der Leuchtenabdeckung 10. Durch die erfindungsgemäße voneinander unabhängige elektrische Kontaktierung der einzelnen Leiterbahnen 2 führt die Beschädigung einer Leiterbahn 2 vorteilhaft nicht zu einem kompletten Ausfall der Beheizung in der Leuchtenabdeckung 10.

Fig. 2 zeigt eine Draufsicht auf eine alternative Ausgestaltung der erfindungsgemäßen Leuchtenabdeckung 10. Auf der Innenseite (I) des polymeren Grundkörpers 1 sind elf Leiterbahnen 2 angeordnet. Die Leiterbahnen 2 sind parallel zueinander und vertikal angeordnet. Die Leiterbahnen 2 sind Abschnitte eines einzigen Heizdrahtes, der in schleifenartig miteinander verbundenen geraden Abschnitten auf den polymeren Grundkörper 1 aufgebracht ist. Benachbarte Leiterbahnen 2 sind somit durch einen Bereich des Heizdrahtes miteinander verbunden, wobei die Verbindung alternierend auf der von der ersten Stromsammelschiene 3 abgewandten Seite der zweiten Stromsammelschiene 3 und auf der von der zweiten Stromsammelschiene 3 abgewandten Seite der ersten Stromsammelschiene 3 erfolgt.

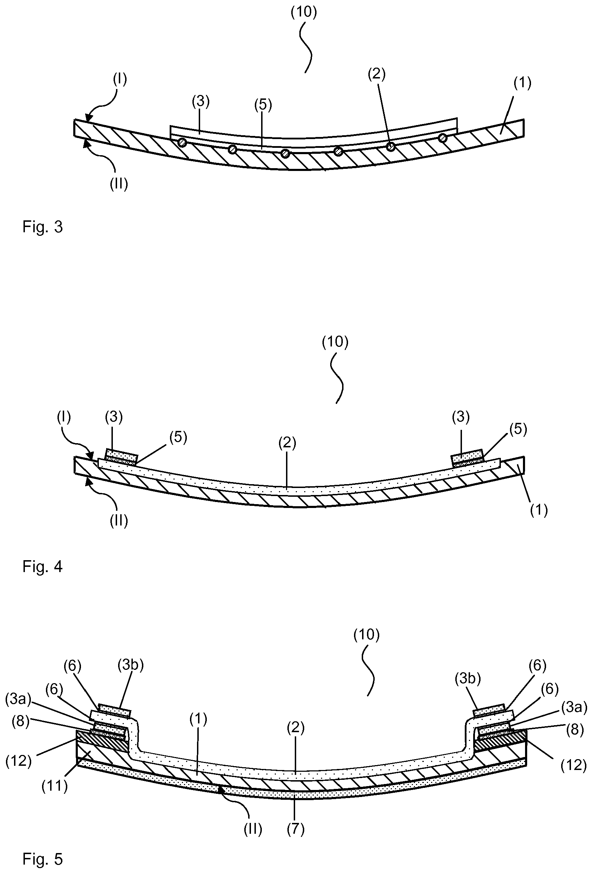

Fig. 3 zeigt einen Schnitt entlang A-A' durch die erfindungsgemäße beheizbare Leuchtenabdeckung 10 gemäß Figur 1. Zu sehen ist der polymere Grundkörper 1 und darin eingebettete Leiterbahnen 2, die horizontal und parallel verlaufen, sowie die hinter der Schnittlinie A-A' befindliche Stromsammelschiene 3 und der elektrisch leitfähige Kleber 5.

Fig. 4 zeigt einen Schnitt entlang B-B' durch die erfindungsgemäße beheizbare Leuchtenabdeckung 10 gemäß Figur 1. Gezeigt werden Stromsammelschienen 3, die vertikal verlaufen und die mit einem elektrisch leitfähigen Kleber 5 an den polymeren Grundkörper 1 und die Leiterbahnen 2 angeklebt sind.

Fig. 5 zeigt einen Schnitt entlang B-B' durch eine alternative Ausgestaltung der erfindungsgemäßen beheizbaren Leuchtenabdeckung 10. In den beiden Bereichen der elektrischen Kontaktierung sind die Leiterbahnen 2 nicht in den polymeren Grundkörper 1 eingebettet. Jede Leiterbahn 2 ist in einem nicht in den polymeren Grundkörper 1 eingebetteten Bereich zwischen einer ersten unteren Stromsammelschiene 3a und einer ersten oberen Stromsammelschiene 3b angeordnet. Jede Leiterbahn 2 ist im anderen nicht in den polymeren Grundkörper 1 eingebetteten Bereich zwischen einer zweiten unteren Stromsammelschiene 3a und einer zweiten oberen Stromsammelschiene 3b angeordnet. Die Leiterbahnen 2 sind mit den Stromsammelschienen 3a, 3b mittels einer Lotmasse 6 verbunden. Die Lotmasse 6 enthält Silber. Die erste untere Stromsammelschiene 3a und die zweite untere Stromsammelschiene 3a sind mittels eines doppelseitigen Klebebandes 8 auf dem polymeren Grundkörper 1 fixiert.

Der polymere Grundkörper 1 ist durch Mehrkomponenten-Spritzgießen hergestellt. Der polymere Grundkörper 1 enthält eine transparente Komponente 11 mit einer Dicke von 4 mm. Auf Bereichen der transparenten Komponente 11 ist eine opake Komponente 12 mit einer Dicke von 2 mm aufgebracht. Die transparente Komponente 11 enthält Polycarbonat (PC). Die opake Komponente 12 enthält ein mineralgefülltes Polycarbonat (PC)-Polyethylenterephthalat (PET)-Gemisch. Das Ausgangsmaterial zum Spritzgießen der opaken Komponente 12 wurde von der Firma Teijin Chemicals Ltd. bereitgestellt (Panlite Y-0346 Colour No. TG6654). Auf der opaken Komponente 12 sind die Stromsammelschienen 3a angeordnet. Dadurch wird die Sicht auf die elektrische Kontaktierung der Leiterbahnen 2 mittels der Stromsammelschienen durch den polymeren Grundkörper 1 hindurch vorteilhaft verdeckt.

Auf der Außenseite (II) des polymeren Grundkörpers 1 ist eine Schutzbeschichtung 7 aufgebracht. Die Schutzbeschichtung 7 enthält einen thermisch härtenden Lack auf Basis von Polysiloxan (Momentive PHC587) und weist eine Schichtdicke von 15 µm auf. Durch die Schutzbeschichtung 7 wird der polymere Grundkörper 1 vorteilhaft vor Umwelteinflüssen wie Witterung und mechanischer Einwirkung geschützt.

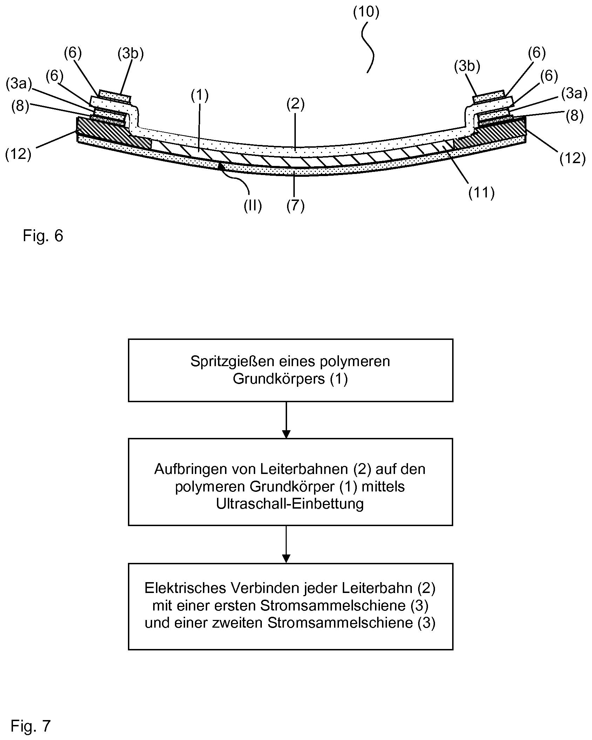

Fig. 6 zeigt einen Schnitt entlang B-B' durch eine alternative Ausgestaltung der erfindungsgemäßen beheizbaren Leuchtenabdeckung 10. Im Bereich der elektrischen Kontaktierung der Leiterbahnen 2 erstreckt sich die opake Komponente 12 von der Innenseite (I) des polymeren Grundkörpers 1 bis zur Außenseite (II) des polymeren Grundkörpers 1. Die Sicht auf die elektrische Kontaktierung der Leiterbahnen 2 mittels der Stromsammelschienen durch den polymeren Grundkörper 1 hindurch wird vorteilhaft verdeckt.

Fig. 7 zeigt ein Flussdiagramm eines Ausführungsbeispiels des erfindungsgemäßen Verfahrens zur Herstellung einer beheizbaren Leuchtenabdeckung (10). In einem ersten Schritt wird ein polymerer Grundkörper 1 im Spritzguß-Verfahren hergestellt. Der polymere Grundkörper 1 enthält Polycarbonat. Der polymere Grundkörper 1 weist eine Dicke von 4 mm und die für die Leuchtenabdeckung (10) vorgesehene dreidimensionale, gebogene Form auf. Anschließend werden Heizdrähte als Leiterbahnen 2 auf die Innenseite (I) des polymeren Grundkörpers 1 mittels Ultraschall-Einbettung aufgebracht. Die Leiterbahnen 2 enthalten Kupfer und weisen eine Dicke von 70 µm auf. Die Leiterbahnen 2 werden entlang ihrer gesamten Länge in den polymeren Grundkörper 1 eingebettet, wobei die Eindringtiefe der Leiterbahnen 2 in den polymeren Grundkörper 1 etwa 45 µm beträgt. Anschließend wird eine erste Sammelschiene 3 und eine zweite Sammelschiene 3 mit jeder Leiterbahn 2 mittels eines elektrisch leitfähigen Klebers 5 verbunden.

In einer alternativen bevorzugten Ausführung werden die zur elektrischen Kontaktierung mit den Stromsammelschienen 3 vorgesehenen Bereiche an den Enden der Leiterbahnen 2 nicht in den polymeren Grundkörper 1 eingebettet. Nach dem Aufbringen der Leiterbahnen 2 wird eine erste untere Stromsammelschiene 3a und eine zweite untere Stromsammelschiene 3a mit einem doppelseitigen Klebeband 8 auf dem polymeren Grundkörper 1 angeordnet. Der nicht in den polymeren Grundkörper 1 eingebettete Bereich an einem Ende jeder Leiterbahn 2 wird über die erste untere Stromsammelschiene 3a geführt. Der nicht in den polymeren Grundkörper 1 eingebettete Bereich am anderen Ende jeder Leiterbahn 2 wird über die zweite untere Stromsammelschiene 3a geführt. Es wird Lotmasse 6 auf der ersten unteren Stromsammelschiene 3a und der zweiten unteren Stromsammelschiene 3a angeordnet. Anschließend wird eine erste obere Stromsammelschiene 3b oberhalb der ersten unteren Stromsammelschiene 3a angeordnet und eine zweite obere Stromsammelschiene 3b oberhalb der zweiten unteren Stromsammelschiene 3a angeordnet. Die erste untere Stromsammelschiene 3a und die erste obere Stromsammelschiene 3b sowie die zweite untere Stromsammelschiene 3a und die zweite obere Stromsammelschiene 3b werden unter Energieeintrag mit den Leiterbahnen 2 verlötet.

Im erfindungsgemäßen Verfahren wird der polymere Grundkörper 1 bereitgestellt, bevor die Leiterbahnen 2 aufgebracht werden. Dadurch werden die Leiterbahnen 2 im Gegensatz zum Stand der Technik nicht durch Umformungsschritte nach dem Aufbringen der Leiterbahnen 2 belastet. Bei keiner der angefertigten Testproben wurde eine Beschädigung der Leiterbahnen 2, der Stromsammelschienen 3 oder der Verbindung zwischen einer Leiterbahn 2 und einer Stromsammelschiene 3 festgestellt.

Die erfindungsgemäßen Leiterbahnen 2 ermöglichten die Entfernung von kondensierter Luftfeuchtigkeit und Eis von der Leuchtenabdeckung (10) innerhalb kurzer Zeit. Durch die vom Stand der Technik abweichende elektrische Kontaktierung jeder Leiterbahn 2 mittels der Stromsammelschienen 3 führte auch eine absichtlich hervorgerufene Beschädigung einer einzelnen Leiterbahn 2 nicht zum kompletten Ausfall der Heizwirkung.

Dieses Ergebnis war für den Fachmann unerwartet und überraschend.

### Bezugszeichenliste

- (1): polymerer Grundkörper
- (2): Leiterbahn
- (3): Stromsammelschiene
- (3a): untere Stromsammelschiene
- (3b): obere Stromsammelschiene
- (5): elektrisch leitfähiger Kleber
- (6): Lotmasse
- (7): Schutzbeschichtung
- (8): doppelseitiges Klebeband
- (10): beheizbare Leuchtenabdeckung
- (11): transparente Komponente von 1
- (12): opake Komponente von 1

- (I): Innenseite des polymeren Grundkörpers 1
- (II): Außenseite des polymeren Grundkörpers 1

- A-A': Schnittlinie
- B-B': Schnittlinie

## Patentansprüche

1. Eine beheizbare Leuchtenabdeckung (10), zumindest umfassend:
- einen polymeren Grundkörper (1),
- eine erste Stromsammelschiene (3), eine zweite Stromsammelschiene (3) und mindestens zwei Leiterbahnen (2) an der Innenseite (I) des polymeren Grundkörpers (1), wobei jede Leiterbahn (2) mit der ersten Stromsammelschiene (3) und mit der zweiten Stromsammelschiene (3) elektrisch verbunden ist, **dadurch gekennzeichnet, dass** zumindest ein Abschnitt jeder Leiterbahn (2) in den polymeren Grundkörper eingebettet ist.

2. Leuchtenabdeckung (10) nach Anspruch 1, wobei die Leiterbahnen (2) mit einer Tiefe, die von 50 % bis 90 %, bevorzugt von 60 % bis 75 % ihrer Dicke beträgt, in die Oberfläche des polymeren Grundkörpers (1) eingebettet sind.

3. Leuchtenabdeckung (10) nach einem der Ansprüche 1 bis 2, wobei der polymere Grundkörper (1) zumindest Polycarbonat und /oder Polymethylmethacrylat enthält.

4. Leuchtenabdeckung (10) nach einem der Ansprüche 1 bis 3, wobei die Dicke des polymeren Grundkörpers (1) von 2 mm bis 5 mm beträgt.

5. Leuchtenabdeckung (10) nach einem der Ansprüche 1 bis 4, wobei die Leiterbahnen (2) zumindest Wolfram, Kupfer Nickel, Mangan, Aluminium, Silber, Chrom, Eisen und / oder Legierungen davon enthalten.

6. Leuchtenabdeckung (10) nach einem der Ansprüche 1 bis 5, wobei die Leiterbahnen (2) eine Dicke von 15 µm bis 200 µm, bevorzugt von 25 µm bis 90 µm aufweisen.

7. Leuchtenabdeckung (10) nach einem der Ansprüche 1 bis 6, wobei die erste Stromsammelschiene (3) und die zweite Stromsammelschiene (3) zumindest Wolfram, Kupfer Nickel, Mangan, Aluminium, Silber, Chrom, Eisen und / oder Legierungen davon enthalten.

8. Leuchtenabdeckung (10) nach einem der Ansprüche 1 bis 7, wobei auf der Außenseite (II) des polymeren Grundkörpers (1) eine Schutzbeschichtung (7) angeordnet ist, die zumindest ein Polysiloxan, ein Polyacrylat, ein Polymethacrylat und / oder ein Polyurethan enthält und bevorzugt eine Dicke von 1 µm bis 50 µm, besonders bevorzugt von 2 µm bis 25 µm aufweist.

9. Leuchtenabdeckung (10) nach einem der Ansprüche 1 bis 8, wobei die Leiterbahnen (2) über eine Lotmasse (6) mit der ersten Stromsammelschiene (3) und der zweiten Stromsammelschiene (3) elektrisch verbunden sind.

10. Leuchtenabdeckung (10) nach einem der Ansprüche 1 bis 9, wobei ein Bereich jeder Leiterbahn (2) zwischen einer ersten unteren Stromsammelschiene (3a) und einer ersten oberen Stromsammelschiene (3b) angeordnet ist und ein weiterer Bereich jeder Leiterbahn (2) zwischen einer zweiten unteren Stromsammelschiene (3a) und einer zweiten oberen Stromsammelschiene (3b) angeordnet ist.

11. Verfahren zur Herstellung einer beheizbaren Leuchtenabdeckung (10), wobei zumindest
a) ein polymerer Grundkörper (1) bereitgestellt wird,
b) mindestens zwei Leiterbahnen (2) durch Ultraschall-Einbettung an der Innenseite (I) des polymeren Grundkörpers (1) angebracht werden und
c) jede Leiterbahn (2) mit einer ersten Stromsammelschiene (3) und einer zweiten Stromsammelschiene (3) elektrisch verbunden wird.

12. Verfahren nach Anspruch 11, wobei eine Schutzbeschichtung (7) auf die Außenseite (II) des polymeren Grundkörpers (1) aufgebracht wird.

13. Verfahren nach Anspruch 11 oder 12, wobei der polymere Grundkörper (1) durch Spritzgießen oder durch Thermoformen bereitgestellt wird.

14. Verwendung einer beheizbaren Leuchtenabdeckung (10) nach einem der Ansprüche 1 bis 10 als Abdeckung für Leuchten von Fortbewegungsmitteln für den Verkehr auf dem Lande, in der Luft oder zu Wasser, insbesondere für Frontscheinwerfer, Rück-, Seitenmarkierungs- und / oder Umrissleuchten von Personenkraftwagen, Lastkraftwagen, Bussen, Straßenbahnen, U-Bahnen, Zügen und Motorrädern.

## Claims

1. A heatable luminaire cover (10), comprising at least:
- a polymeric main body (1),
- a first busbar (3), a second busbar (3), and at least two conductor tracks (2) on the inner side (I) of the polymeric main body (1), wherein each conductor track (2) is electrically connected to the first busbar (3) and to the second busbar (3), **characterized in that** at least one section of each conductor track (2) is embedded into the polymeric main body (1).

2. Luminaire cover (10) according to claim 1, wherein the conductor tracks (2) are embedded into the surface of the polymeric main body (1) at a depth that is from 50% to 90%, preferably from 60% to 75% of their thickness.

3. Luminaire cover (10) according to one of claims 1 through 2, wherein the polymeric main body (1) contains at least polycarbonate and/or polymethyl methacrylate.

4. Luminaire cover (10) according to one of claims 1 through 3, wherein the thickness of the polymeric main body (1) is from 2 mm to 5 mm.

5. Luminaire cover (10) according to one of claims 1 through 4, wherein the conductor tracks (2) contain at least tungsten, copper, nickel, manganese, aluminum, silver, chromium, iron, and/or alloys thereof.

6. Luminaire cover (10) according to one of claims 1 through 5, wherein the conductor tracks (2) have a thickness of 15 µm to 200 µm, preferably of 25 µm to 90 µm.

7. Luminaire cover (10) according to one of claims 1 through 6, wherein the first busbar (3) and the second busbar (3) contain at least tungsten, copper, nickel, manganese, aluminum, silver, chromium, iron, and/or alloys thereof.

8. Luminaire cover (10) according to one of claims 1 through 7, wherein a protective coating (7) that contains at least a polysiloxane, a polyacrylate, a polymethacrylate, and/or a polyurethane and preferably has a thickness from 1 µm to 50 µm, particularly preferably from 2 µm to 25 µm is arranged on the outer side (II) of the polymeric main body (1).

9. Luminaire cover (10) according to one of claims 1 through 8, wherein the conductor tracks (2) are electrically connected to the first busbar (3) and the second busbar (3) via a soldering compound (6).

10. Luminaire cover (10) according to one of claims 1 through 9, wherein a region of each conductor track (2) is arranged between a first lower busbar (3a) and a first upper busbar (3b) and another region of each conductor track (2) is arranged between a second lower busbar (3a) and a second upper busbar (3b).

11. Method for producing a heatable luminaire cover (10), wherein at least
a) a polymeric main body (1) is prepared,
b) at least two conductor tracks (2) are fixed on the inner side (I) of the polymeric main body (1) by ultrasonic embedding, and
c) each conductor track (2) is electrically connected to a first busbar (3) and a second busbar (3).

12. Method according to claim 11, wherein a protective coating (7) is applied on the outer side (II) of the polymeric main body (1).

13. Method according to claim 11 or 12, wherein the polymeric main body (1) is prepared by injection molding or by thermoforming.

14. Use of a heatable luminaire cover (10) according to one of claims 1 through 10 as a cover for lights of means of transportation for travel on land, in the air, or on water, in particular for headlights, taillights, side-marker lights, and/or position lights of passenger cars, trucks, buses, streetcars, subways, trains, and motorcycles.

## Revendications

1. Un cache de luminaire (10) pouvant être chauffé, comprenant au moins:
- un corps de base en polymère (1),
- un premier bus d'alimentation (3), un deuxième bus d'alimentation (3) et au moins deux pistes conductrices (2) sur la face interne (I) du corps de base en polymère (1), où chaque piste conductrice (2) est relié électriquement au premier bus d'alimentation (3) et au deuxième bus d'alimentation (3), **caractérisé en ce qu'**au moins une section de chaque piste conductrice (2) est intégrée dans le corps de base en polymère.

2. Cache de luminaire (10) selon la revendication 1, où les pistes conductrices (2) sont intégrées dans la surface du corps de base en polymère (1) à une profondeur qui correspond à 50% à 90% de leur épaisseur, de préférence de 60% à 75% de leur épaisseur.

3. Cache de luminaire (10) selon l'une des revendications 1 ou 2, où le corps de base en polymère (1) contient au moins du polycarbonate et/ou du polyméthacrylate de méthyle.

4. Cache de luminaire (10) selon l'une des revendications 1 à 3, où l'épaisseur du corps de base en polymère (1) s'élève à 2 mm à 5 mm.

5. Cache de luminaire (10) selon l'une des revendications 1 à 4, où les pistes conductrices (2) contiennent au moins du tungstène, du cuivre, du nickel, du manganèse, de l'aluminium, de l'argent, du chrome, du fer et/ou des alliages de ceux-ci.

6. Cache de luminaire (10) selon l'une des revendications 1 à 5, où les pistes conductrices (2) présentent une épaisseur entre 15 µm et 200 µm, de préférence de 25 µm à 90 µm.

7. Cache de luminaire (10) selon l'une des revendications 1 à 6, où la première piste conductrice (3) et la deuxième piste conductrice (3) contiennent au moins du tungstène, du cuivre, du nickel, du manganèse, de l'aluminium, de l'argent, du chrome, du fer et/ou des alliages de ceux-ci.

8. Cache de luminaire (10) selon l'une des revendications 1 à 7, où un revêtement protecteur (7) est disposé sur la face extérieure (II) du corps de base en polymère (1), qui contient au moins un polysiloxane, un polyacrylate, un polyméthacrylate de méthyle et/ou un polyuréthane et présente une épaisseur de préférence entre 1 µm et 50 µm, de façon particulièrement préférée de 2 µm à 25 µm.

9. Cache de luminaire (10) selon l'une des revendications 1 à 8, où les pistes conductrices (2) sont reliées électriquement par une masse de brasure (6) à la première piste conductrice (3) et la deuxième piste conductrice (3).

10. Cache de luminaire (10) selon l'une des revendications 1 à 9, où une région de chaque piste conductrice (2) est disposée entre un premier bus d'alimentation inférieur (3 a) et un premier bus d'alimentation supérieur (3 b), et une autre zone de chaque piste conductrice (2) est disposée entre un deuxième bus d'alimentation inférieure (3 a) et un deuxième bus d'alimentation supérieure (3 b).

11. Procédé de fabrication d'un cache de luminaire (10) pouvant être chauffé, où au moins
a) un corps en polymère (1) est fourni,
b) au moins deux pistes conductrices (2) sont attachées sur la face interne (I) du corps de base en polymère (1) par l'incorporation à ultrasons et
c) chaque piste conductrice (2) est reliée électriquement à un premier bus d'alimentation (3) et un deuxième bus d'alimentation (3).

12. Procédé selon la revendication 11 où un revêtement de protection (7) est appliqué sur la face extérieure (II) du corps de base en polymère, (1).

13. Procédé selon la revendication 11 ou 12, où le corps de base en polymère (1) est mis à disposition par moulage par injection ou par thermoformage.

14. Utilisation d'un cache de luminaire (10) pouvant être chauffé, selon l'une des revendications 1 à 10 comme cache pour les luminaires de moyens de locomotion pour la locomotion sur la terre, dans l'air ou sur l'eau, en particulier pour les phares avant, phares arrière, feu de position latéraux et/ou feux de gabarit des voitures, des camions, des autobus, des tramways, des métros, des trains et des motos.
